# EUROPEAN PATENT SPECIFICATION

(11) **EP 4 368 495 B1**
(45) Date of publication and mention of the grant of the patent: **10.06.2026**
(21) Application number: 21949435.8
(22) Date of filing: 11.11.2021
(51) Int. Cl.: B02C 18/08, B63B 13/00, B63J 4/00, C02F 1/34, C02F 103/00, C02F 1/32, C02F 1/76

(54) **BALLAST WATER TREATMENT SYSTEM USING MICRO SLASH UNIT**
BALLASTWASSERBEHANDLUNGSSYSTEM MIT MIKROWIMPERNEINHEIT
SYSTÈME DE TRAITEMENT D'EAU DE BALLAST UTILISANT UNE UNITÉ DE MICRO-RÉDUCTION

(30) Priority: 05.07.2021 KR 20210087901
(43) Date of publication of application: 15.05.2024
(73) Proprietor: Seo, Min Su, Seoul 06373 (KR)
(72) Inventor: Seo, Min Su, Seoul 06373 (KR)
(74) Representative: Viering, Jentschura & Partner mbB Patent- und Rechtsanwälte
(86) International application number: PCT/KR2021/016419
(87) International publication number: WO 2023/282397

(56) References cited:
- JP-A- 2006 212 513
- KR-A- 20140 115 874
- KR-A- 20150 065 462
- KR-A- 20150 112 310
- KR-A- 20160 149 796
- KR-B1- 101 851 168
- US-A1- 2016 130 165

## Description

### Technical Field

The present invention relates to a ballast water treatment system, and more specifically, to a ballast water treatment system using a micro slash unit that is capable of mechanically pulverizing microorganisms contained in ballast water to be filled in ballast tanks of a ship through the micro slash unit, thereby satisfying the environmental conditions for the ballast water discharge from the ship.

### Background Art

Generally, a plurality of ballast tanks are disposed in a ship to fill sea water supplied from sea chests therein.

The ballast tanks are located on the bottom or left and right sides of a body of the ship and thus adjusted in the amounts of ballast water (sea water) filled therein so that they serve to lower the center of gravity of the ship and control the left and right balance of the ship in consideration of the weights of objects loaded in the ship, thereby enabling the ship to stably sail.

When the ship enters a port of another country, however, the ballast water (sea water) filled in the ballast tanks has to be discharged to the outside from the ship, and in this case, harmful microorganisms, planktons, germs, bacteria, etc. contained in the ballast water are discharged together with the ballast water, thereby disturbing the native ecosystem around the sea area to cause ocean pollution.

To prevent the ocean pollution caused by the ballast water discharge, accordingly, environmental regulations for the ballast water discharge are suggested in many countries in the world, and International Maritime Organization (IMO) requires the installation for a ballast water treatment device for removing harmful marine organisms from ballast water before the ballast water is discharged on ports and open sea.

Accordingly, a ballast water treatment system (BWTS) for purifying the ballast water is mounted on the ship to satisfy the regulations for ballast water discharge.

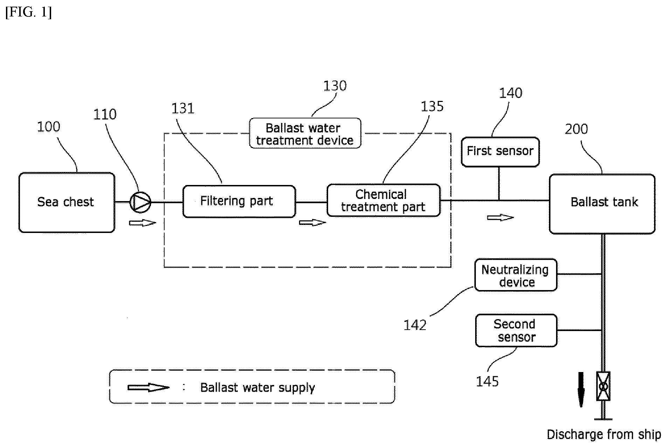

Hereinafter, a conventional ballast water treatment system will be explained with reference to FIG 1.

FIG. 1 is a schematic diagram showing a general ballast water treatment system.

As shown, the general ballast water treatment system is adapted to purify the sea water supplied from a sea chest 100 to a ballast tank 200 and includes a ballast water treatment device 130.

Accordingly, the sea water introduced from the sea chest 100 through a ballast pump 110 is purified through the ballast water treatment device 130 and then filled in the ballast tank 200.

In this case, the ballast water treatment device 130 includes a filtering part 131 for removing harmful microorganisms or planktons contained in the ballast water and a chemical treatment part 135 for disinfecting the harmful microorganisms or planktons.

Further, as shown, the ballast water treatment system includes a neutralizing device 142 adapted to neutralize the ballast water when the ballast water in the ballast tank 200 is discharged to the outside from the ship and first and second sensors 140 and 145 adapted to measure oxidant concentration in the ballast water when the ballast water is supplied and discharged to the outside from the ship.

In this case, the filtering part 131 serves to remove the harmful microorganisms or planktons contained in the ballast water using a filtering member, and the chemical treatment part 135 serves to disinfect the harmful microorganisms or planktons using an oxidant such as hypochlorite (NaClO) having disinfecting effectiveness.

In this case, the conventional filtering part 131 filters and removes the microorganisms using a filter element having a structure of a mesh or disc with a plurality of fine pores or gaps having the sizes in the range of about 50 to 100 µm.

However, the conventional ballast water treatment system using the filtering part 131 and the chemical treatment part 135 has the following problems.

Firstly, the pores or gaps of the conventional filtering part have to be limited to the sizes of tens of micrometers so as to filter the microorganisms, so that clogging of the filtering part may occur periodically, thereby causing the operation of the system to be stopped and greatly increasing the maintenance cost thereof.

Secondly, the amount of ballast water filled in the ballast tank of the ship is about 500 to 3,000 tons, and accordingly, the ballast water treatment system has to ensure about hundreds of tons to thousands of tons of sea water per hour according to ship sizes, so that to satisfy the conditions, the filtering part has to become greatly large and the ballast water treatment system has to be accordingly bulky, thereby having difficulties in ensuring installation space and workability, requiring the movement of the ship to a dry dock to perform a repair work such as installation or replacement of the filtering part, while stopping the sailing of the ship, and causing huge loss and large time waste owing to the stop of the sailing.

Thirdly, the pores or gaps of the filtering part have to have the sizes greater than at least 50 µm so as to ensure the flow rate of the ballast water, so that the ultra microorganisms or planktons may not be filtered at all through the filtering part, thereby making the efficiency of the whole system deteriorated.

Lastly, the conventional filtering part does not filter the ultra microorganisms and thus passes them therethrough, and accordingly, high concentration hypochlorite has to be used in the chemical treatment part, so that a hypochlorite generating device for ensuring a large amount of hypochlorite and a neutralizing device for neutralizing hypochlorous acids remaining in the ballast water have to be necessarily required.

KR20150112310A, US2016/130165A1 and KR101851168B1 describe ballast water treatment systems of the prior art.

### Disclosure of the Invention

### Technical Problems

Accordingly, it is an object of the present invention to provide a ballast water treatment system using a micro slash unit that is capable of allowing the micro slash unit to mechanically pulverizing ultra microorganisms using a blade rotating body having relatively larger gaps than the conventional filtering part, thereby prevent clogging from occurring in the supply of ballast water.

It is another object of the present invention to provide a ballast water treatment system using a micro slash unit that is capable of being compact in size to minimize an installation space and performing a repair work such as installation or replacement on the ship itself, without moving to a dry dock.

It is yet another object of the present invention to provide a ballast water treatment system using a micro slash unit that is capable of perfectly killing ultra microorganisms using the micro slash unit to allow a minimal chemical or electrical disinfection treatment in a disinfection treatment part to be performed, thereby improving the efficiency of the system.

It is still another object of the present invention to provide a ballast water treatment system using a micro slash unit that is capable of minimizing an amount of residual oxidants in ballast water, thereby satisfying the environmental regulations for ballast water discharge, even while the ballast water does not pass through any neutralizing device when it is discharged to the outside from the ship.

### Technical Solutions

To accomplish the above-mentioned objects, according to the present invention, a ballast water treatment system for purifying ballast water to be supplied to ballast tanks of the ship is provided, as defined in claim 1. In particular, it includes:
a ballast pump located on a ballast water supply pipe for supplying the ballast water; a flow meter for measuring a flow rate of the ballast water; a ballast water treatment device for purifying the ballast water; a sensor for measuring residual oxidant concentration of the ballast water; and a controller for controlling the supply and purification of the ballast water, wherein the ballast water treatment device may include a micro slash unit adapted to consistently apply mechanical rotating shocks to the ballast water by means of the rotation of a multi-stacked blade part to thus pulverize or kill microorganism contained in the ballast water and a disinfecting treatment part for chemically or electrically disinfecting the residual microorganisms in the ballast water, and the controller may control the revolutions per minute of the multi-stacked blade part and the disinfection strength of the disinfecting treatment part according to the flow rate measured by the flow meter and the residual oxidant concentration measured by the sensor.

The micro slash unit may include a blade rotating body having the multi-stacked blade part mounted thereon, the multi-stacked blade part having a plurality of gaps through which the ballast water passes, so that as the blade rotating body rotates at a high speed, the ballast water introduced into the interior of the blade rotating body passes through the plurality of gaps and is thus discharged in a radial direction.

Further, desirably, the controller rotates the blade rotating body of the micro slash unit at 850 to 1200 rpm.

Moreover, the disinfecting treatment part may include at least any one of a chemical feed unit for feeding a chemical to the ballast water to disinfect the residual microorganisms, and an electrolysis unit for producing an oxidant.

In this case, desirably, the chemical feed unit may feed chlorine dioxide as the chemical to the ballast water.

Also, the ballast water supply pipe may include a first branch pipe for bypassing the ballast water treatment device, a second branch pipe for bypassing the ballast pump, and a bypass pipe disposed between the ballast pump and the flow meter to discharge the ballast water to the outside from the ship, so that the ballast water in the ballast tanks is discharged to the outside from the ship, without passing through the ballast water treatment device.

### Advantageous Effectiveness

As described above, the ballast water treatment system according to the present invention has the following advantages.

Firstly, the ultra microorganisms contained in the ballast water can be mechanically pulverized and killed to basically prevent clogging from occurring in the supply of ballast water, thereby efficiently operating the ballast water treatment system and remarkably reducing the maintenance cost thereof.

Secondly, the ballast water treatment system can be compact in size so that the devices related thereto can be efficiently located to improve space usability, thereby enabling application to various ship structures.

Thirdly, the repair work such as installation or replacement of the ballast water treatment system can be done on the ship itself, without moving to the dry dock, thereby remarkably reducing a cost caused by the stop of ship sailing.

Lastly, a minimal chemical or electrical treatment in the disinfecting treatment part can be performed, thereby improving the energy efficiency of the whole system and satisfying the environmental regulations for ballast water discharge, without having any neutralizing device.

### Brief Description of Drawings

FIG. 1 is a schematic diagram showing a general ballast water treatment system.
FIG 2 is a schematic diagram showing a ballast water treatment system using a micro slash unit according to the present invention.
FIG 3 is a sectional view showing the micro slash unit according to the present invention.
FIG 4 is a perspective view showing a blade rotating body of the micro slash unit of FIG 3.
FIG 5 is a bottom view showing the blade rotating body of FIG 4.
FIG 6 is a top view showing a multi-stacked blade part of the blade rotating body of FIG 4.
FIG 7 is a perspective view showing a second multi-stacked blade part of the blade rotating body of FIG. 4.
FIG 8 is a schematic diagram showing a ballast mode of the ballast water treatment system using the micro slash unit according to the present invention.
FIG 9 is a schematic diagram showing a de-ballast mode of the ballast water treatment system using the micro slash unit according to the present invention.
FIG 10 is a schematic diagram showing a bypass mode of the ballast water treatment system using the micro slash unit according to the present invention.

### Best Mode for Invention

Hereinafter, an explanation of a ballast water treatment system using a micro slash unit according to the present invention will be given in detail with reference to the attached drawings.

As shown in FIG 1, first, the ballast water treatment device 130 of the conventional ballast water treatment system includes the filtering part 131 and the chemical treatment part 135 for removing the harmful microorganisms or planktons contained in ballast water (sea water).

The conventional filtering part 131 has to consistently filter a large amount of sea water using the filtering member having the fine pores and gaps with the sizes in the range of about 50 to 100 µm, thereby causing periodical clogging on the filtering member and a lot of problems accompanied thereby.

Accordingly, the ballast water treatment system according to the present invention can be configured to replace the conventional filtering part 131 by a micro slash unit 500 having a multi-stacked blade part, thereby effectively pulverizing and killing ultra microorganisms contained in ballast water and preventing clogging from occurring in the supply of ballast water, and configured to allow a minimal chemical or electrical treatment in a disinfecting treatment part 600 to be performed, thereby utilizing low-concentration chlorine dioxide (ClO₂) as an oxidant or improving energy efficiency.

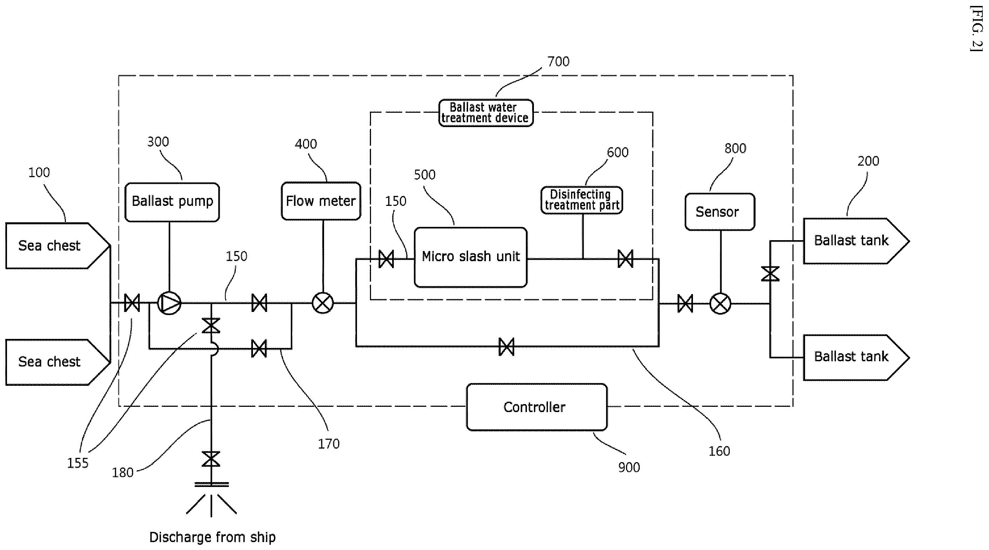

Now, an explanation of the ballast water treatment system using the micro slash unit according to the present invention will be given in detail with reference to FIGs. 2 to 10.

First, the whole configuration of the ballast water treatment system using the micro slash unit according to the present invention will be explained with reference to FIG 2.

In this case, FIG 2 shows the whole configuration of the ballast water treatment system using the micro slash unit according to the present invention.

As shown, the ballast water treatment system using the micro slash unit according to the present invention serves to purify the ballast water (sea water) being supplied from sea chests 100 to ballast tanks 200 and includes a ballast pump 300, a flow meter 400, a ballast water treatment device 700, a sensor 800, and a controller 900.

The sea chests 100 and the ballast tanks 200 are connected to one another by means of a ballast water supply pipe 150 serving as a pipe for supplying the ballast water, and the ballast water supply pipe 150 has a plurality of valves 155 mounted thereon to open and close the flow path thereof if necessary.

The types of valves 155, the number of valves 155, and the positions of valves 155 may not be limited particularly by a configuration as shown, and accordingly, they may be appropriately determined according to the characteristics or arrangements of the parts constituting the ballast water treatment system.

Further, the ballast pump 300 is disposed on the ballast water supply pipe 150 to send the ballast water from the sea chests 100 to the ballast tanks 200, and in this case, the flow meter 400 serves to measure the flow rate of the ballast water being supplied.

Generally, about 500 to 3,000 tons of ballast water is filled in the ballast tanks 200 according to the sizes or characteristics of the ship, and in consideration of the amount of ballast water filled in the ballast tanks 200, desirably, the capacities of the ballast pump 300 and the flow meter 400 are appropriately determined.

Typically used devices may be used as the ballast pump 300 and the flow meter 400, and therefore, a detailed explanation of the ballast pump 300 and the flow meter 400 will be avoided.

Further, the ballast water supply pipe 150 includes a first branch pipe 160, a second branch pipe 170, and a bypass pipe 180 mounted thereon.

The first branch pipe 160 serves to bypass the ballast water treatment device 700 so that if necessary, the ballast water bypasses the ballast water treatment device 700 and thus moves.

Accordingly, the moving path of the ballast water can be adjusted when the maintenance work for the ballast water treatment device 700 is needed or if ballast water treatment is not required.

Further, the second branch pipe 170 serves to bypass the ballast pump 300, and the bypass pipe 180 is disposed between the ballast pump 300 and the flow meter 400.

According to the present invention, as a result, the sea water of the sea chests 100 or the ballast water in the ballast tanks 200 is discharged to the outside from the ship by means of the ballast pump 300, without passing through the ballast water treatment device 700.

Further, the ballast water treatment device 700 serves to purify the ballast water supplied thereto and includes the micro slash unit 500 and the disinfecting treatment part 600.

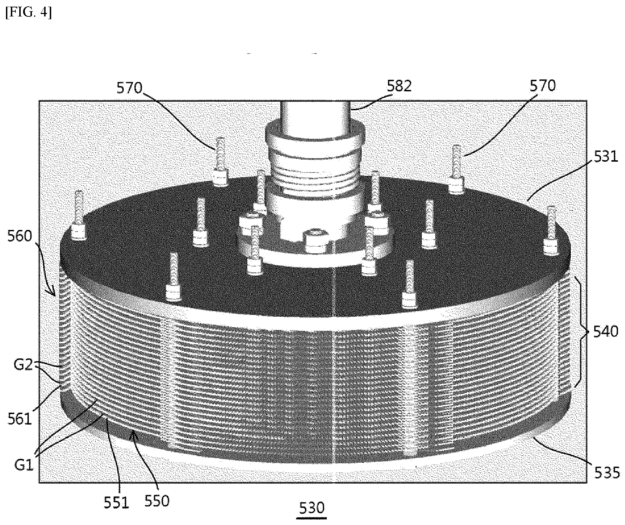

The micro slash unit 500 operates a multi-stacked blade part 540 (See FIG 4) to mechanically pulverize and kill ultra microorganisms, and the disinfecting treatment part 600 serves to disinfect the microorganisms, planktons, germs, or bacteria not treated in the micro slash unit 500 using a disinfector such as an oxidant or using electrical disinfection.

Further, the sensor 800 measures residual oxidant concentration in the ballast water purified in the ballast water treatment device 700 and thus transmits the measured concentration to the controller 900.

In this case, the controller 900 serves to control the operations of the respective parts in the ballast water treatment system to thus control power supply and entire operating process.

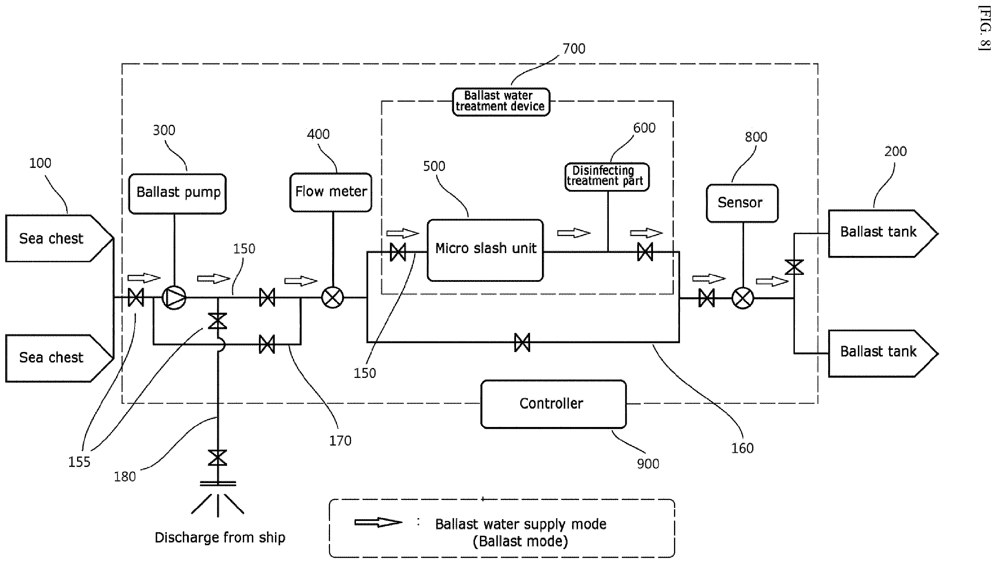

Accordingly, the controller 900 controls the ballast pump 300 and the plurality of valves 155 mounted on the ballast water supply pipe 150 to determine the supply and discharge paths of the ballast water, thereby allowing various operation modes as shown in FIGs. 8 to 10 to be performed. Further, the controller 900 determines the rotating speed of the micro slash unit 500 of the ballast water treatment device 700 and the disinfection strength applied to the ballast water from the disinfecting treatment part 600 in accordance with the flow rate measured by the flow meter 400 and the residual oxidant concentration measured by the sensor 800.

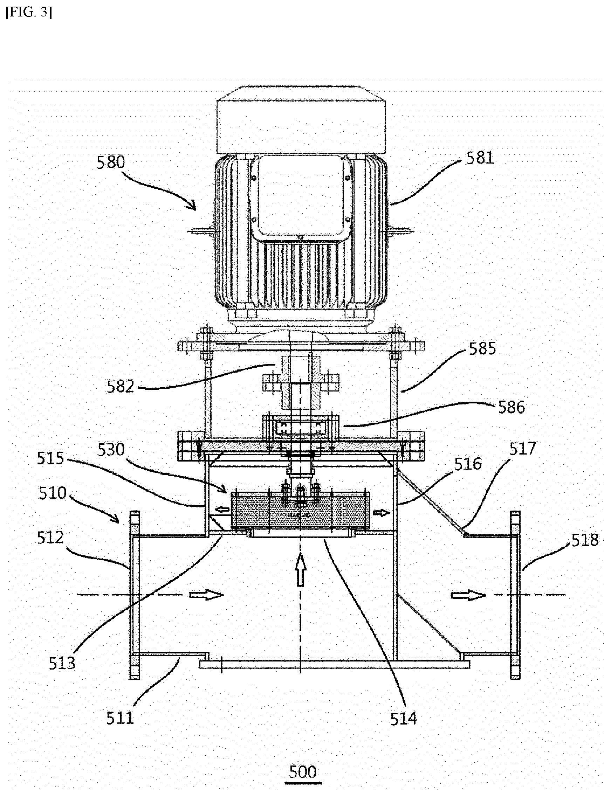

Hereinafter, an explanation of the micro slash unit 500 disposed in the ballast water treatment device 700 will be given in detail with reference to FIGs. 3 to 7.

First, the whole configuration of the micro slash unit 500 will be explained with reference to FIG 3.

FIG 3 is a sectional view showing the micro slash unit 500 according to the present invention.

As shown, the micro slash unit 500 includes a pipe connecting body 510, a blade rotating body 530, and a driver 580.

The pipe connecting body 510 has a structure of a pipe through which the ballast water passes and is connected to the ballast water supply pipe 150 (See FIG 2) for supplying sea water to the ballast tanks 200 from the sea chests 100.

In this case, the pipe connecting body 510 has an inlet pipe 511 and an outlet pipe 517, and the inlet pipe 511 and the outlet pipe 517 are connected to the ballast water supply pipe 150.

The inlet pipe 511 has an inlet 512 into which the ballast water is introduced, and the outlet pipe 517 has an outlet 518 from which the introduced ballast water is discharged.

In this case, the inlet 512 and the outlet 518 have flanges so that the pipe connecting body 510 can be connected to the ballast water supply pipe 150, and as shown, they are formed on the positions facing each other on the same line as each other in a horizontal direction.

However, the positions of the inlet 512 and the outlet 518 may not be limited thereto, and accordingly, they may be formed on various positions and directions according to the positions or shapes of the ballast water supply pipe 150.

Further, the inlet pipe 511 has a given length in a horizontal direction, and as shown in FIG 3, a pulverizer 515 with a given length is located on top of a front side (outlet side) of the inlet pipe 511.

In this case, the front side in the horizontal direction of the inlet pipe 511 facing the inlet 512 is blocked, and a partition wall 513 is disposed on top of the inlet pipe 511 to which the pulverizer 515 is connected.

The partition wall 513 has a communicating hole 514 formed thereon to pass the ballast water therethrough, so that the internal area of the inlet pipe 511 and the internal area of the pulverizer 515 communicate with each other by means of the communicating hole 514.

Accordingly, as shown in FIG 3, the inlet pipe 511 has an inverse 'L'-shaped structure bent at a right angle.

Further, the pulverizer 515 is a part in which the blade rotating body 530 as will be discussed later is insertedly located and has a cylindrical structure whose interior is empty. The underside of the pulverizer 515 is coupled to the partition wall 513 of the inlet pipe 511, and the top of the pulverizer 515 is coupled to the underside of a shaft housing 585 of the driver 580 by means of flanges.

Further, the pulverizer 515 has an outlet hole 516 formed on one side wall (outlet side) thereof and thus communicating with the outlet pipe 517, so that the internal area of the pulverizer 515 communicates with the internal area of the outlet pipe 517.

In this case, the outlet hole 516 of the pulverizer 515 is formed above the outlet 518 of the outlet pipe 517, and accordingly, the outlet pipe 517 extends slantly downward from the outlet hole 516 and is then bent in a horizontal direction to thus form the outlet 518.

Accordingly, the inlet pipe 511, the pulverizer 515, and the outlet pipe 517 have the internal areas communicating with one another sequentially by means of the communicating hole 514 and the outlet hole 516.

Meanwhile, the ballast water, which is supplied from the sea chests 100 by means of the ballast pump 300 (See FIG 2), moves to the micro slash unit 500, and in this case, the ballast water enters the inlet pipe 511 through the inlet 512, as shown in FIG. 3.

The ballast water entering the inlet pipe 511 collides against the front side wall surface of the opposite side to the inlet 512, moves upward, and then enters the interior of the pulverizer 515 through the communicating hole 514.

The ballast water entering the interior of the pulverizer 515 passes through the blade rotating body 530, the outlet hole 516, and the outlet pipe 517 and is thus discharged through the outlet 518.

In this case, as explained with reference to FIG 2, the discharged ballast water moves to the disinfecting treatment part 600.

Further, the inlet pipe 511, the pulverizer 515, and the outlet pipe 517 have guide members with various shapes disposed in the internal areas thereof to gently form the flow path of the ballast water so that the ballast water can move easily.

Meanwhile, the inlet pipe 511, the pulverizer 515, and the outlet pipe 517 are disposed separately from one another, for the conveniences of description, but they may be formed integrally with one another. Otherwise, they may be detachably coupled to one another.

Hereinafter, an explanation of the driver 580 will be given.

As shown in FIG 3, the driver 580 includes a driving motor 581, a driving shaft 582, and the shaft housing 585.

The driving motor 581 applies a rotary force for rotating the blade rotating body 530 and is connected to the blade rotating body 530 by means of the driving shaft 582 to thus rotate the entire blade rotating body 530.

In this case, the driving motor 581 is coupled to the shaft housing 585 connected to the pulverizer 515 of the pipe connecting body 510.

The shaft housing 585 has a cylindrical structure whose interior is empty to coupledly pass the driving shaft 582 therethrough, and the underside of the shaft housing 585 is coupled to the top of the pulverizer 515.

In this case, the driving shaft 582 rotatably passes through the underside of the shaft housing 585 and the top of the pulverizer 515 and is thus coupled to the blade rotating body 530.

Accordingly, the underside of the shaft housing 585 and the top of the pulverizer 515, through which the driving shaft 582 passes, have sealed structures so that the leakage of the ballast water is prevented.

Further, a bearing 586 is disposed on the underside of the shaft housing 585 to gently rotate the driving shaft 582, and the underside of the shaft housing 585 and the top of the pulverizer 515, through which the driving shaft 582 passes, are sealed in common methods to prevent the leakage of the ballast water from occurring.

In this case, the driving shaft 582 may extend by means of shaft connection and be thus coupled to the blade rotating body 530 if necessary in consideration of the scale or size of the unit.

Now, an explanation of the blade rotating body 530 will be given in detail with reference to FIGs. 4 to 7.

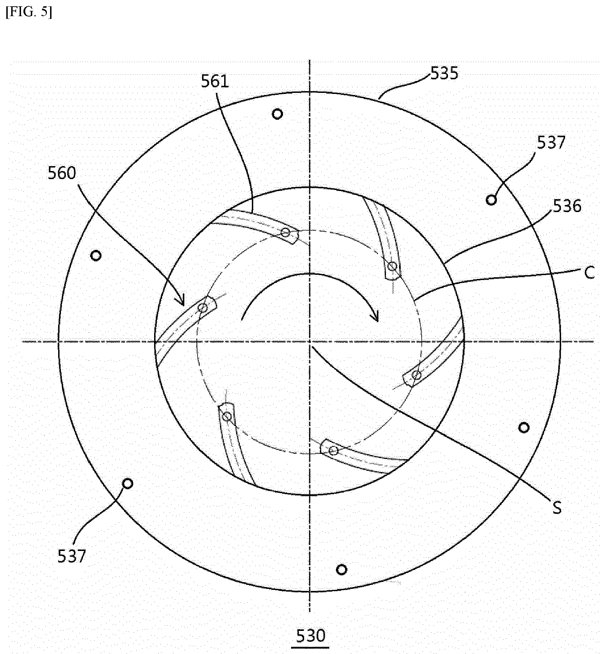

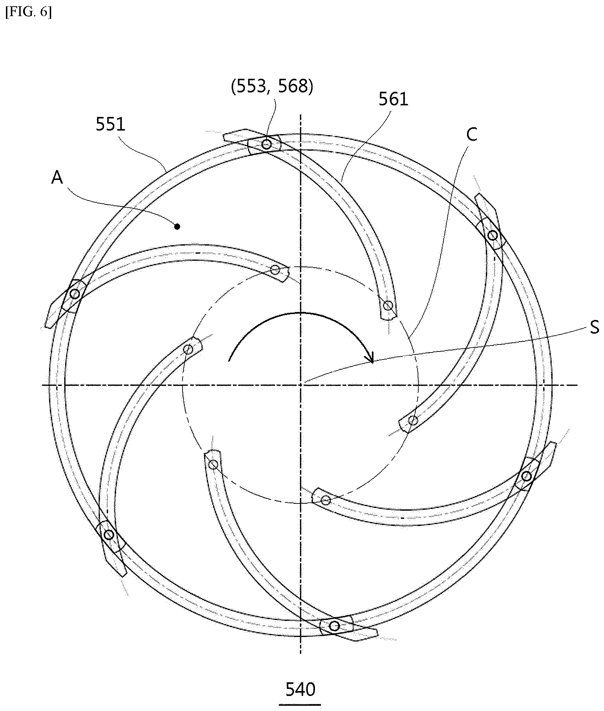

In this case, FIG 4 is a perspective view showing the blade rotating body 530 of the micro slash unit 500 of FIG 3, FIG 5 is a bottom view showing the blade rotating body 530 of FIG 4, and FIG 6 is a top view showing a multi-stacked blade part 540 of the blade rotating body 530 of FIG 4.

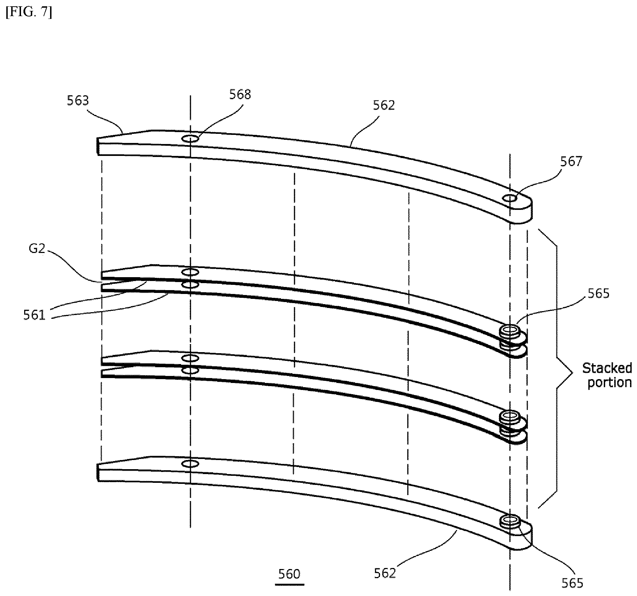

Further, FIG. 7 is a perspective view showing a second multi-stacked blade part 560 of the blade rotating body 530 of FIG 4.

In this case, FIG 6 shows a configuration with blades 551 of a first multi-stacked blade part 550 and blades 561 of six second multi-stacked blade parts 560 forming one layer of the multi-stacked blade part 540 of the blade rotating body 530, for the conveniences of description.

As shown in FIG 3, the blade rotating body 530 is connected to the communicating hole 514 of the inlet pipe 511 and thus located on the flow path along which the ballast water moves. As the blade rotating body 530 rotates at a high speed, the ballast water introduced thereinto passes through a plurality of gaps G1 and G2 and is thus discharged to the outside (in a radial direction), thereby pulverizing and killing the ultra microorganisms contained in the ballast water by means of application of mechanical rotating shocks.

In this case, as shown in FIG 4, the blade rotating body 530 has the multi-stacked blade part 540 in which the plurality of gaps G1 and G2 are repeatedly formed, and the multi-stacked blade part 540 is cylindrical so that the ballast water enters the center thereof.

Accordingly, the ballast water is introduced into the interior of the blade rotating body 530 in a direction of a rotating center axis (a driving axis) S (See FIG 5) of the blade rotating body 530 through the communicating hole 514 of the pipe connecting body 510, passes through a rotating area A (See FIG 6) of the multi-stacked blade part 540 by means of the rotation of the blade rotating body 530 through the driver 580, passes through the plurality of gaps G1 and G2 formed in the multi-stacked blade part 540, and is discharged in the radial direction.

As shown in FIG 4, the blade rotating body 530 includes an upper plate 531, a lower plate 535, and the multi-stacked blade part 540.

In this case, the upper plate 531 and the lower plate 535 have the shapes of circular plates each having a given area and thickness and are facingly spaced apart from each other in the direction of the rotating center axis S.

In this case, the lower end periphery of the driving shaft 582 is coupled to the central portion of the upper plate 531.

Further, as shown in FIG 5, the lower plate 535 has an inlet hole 536 penetrating the central portion thereof to introduce the ballast water thereinto.

The inlet hole 536 is formed correspondingly to the communicating hole 514 of the inlet pipe 511.

The blade rotating body 530 is coupled to the driving shaft 582 and thus rotates at a high speed, and accordingly, the lower plate 535 is disposed spaced apart from top of the partition wall 513 formed on the inlet pipe 511. In this case, desirably, a cylindrical guide member is disposed along the inner peripheral surface of the communicating hole 514 to allow the ballast water to effectively enter the interior of the inlet hole 536.

Further, as shown in FIG 4, the multi-stacked blade part 540 is disposed between the upper plate 531 and the lower plate 535.

The multi-stacked blade part 540 serves to rotate to apply the mechanical rotating shocks to the ballast water, thereby pulverizing and killing the microorganisms contained in the ballast water, and the multi-stacked blade part 540 is disposed between the upper plate 531 and the lower plate 535 to repeatedly form the plurality of gaps G1 and G2 in the direction of the rotating center axis S, so that the ballast water introduced into the central portion of the blade rotating body 530 is discharged to the outside (radially) through the plurality of gaps G1 and G2.

According to the invention, the multi-stacked blade part 540 includes the first multi-stacked blade parts 550 and the second multi-stacked blade parts 560, and as shown in FIGs. 5 and 6, they are provided to form the rotating area A (having a circular band with a given width around the rotating center axis S) along the periphery of the blade rotating body 530.

The first multi-stacked blade parts 550 have the plurality of circular band-shaped blades 551 sequentially stacked onto one another to repeatedly form the plurality of gaps G1 in the direction of the rotating center axis S, while being mounted along the peripheries of the inner surfaces (facing surfaces) of the upper plate 531 and the lower plate 535.

As a result, as shown in FIG 4, the gaps G1 are provided to the form of rings around the rotating center axis S along the periphery of the blade rotating body 530 and thus repeatedly stacked in the direction of the rotating center axis S to form the shape of a cylinder.

In this case, desirably, an outer diameter of the entire blade 551 of each first multi-stacked blade part 550 is somewhat smaller than the outer diameters of the upper plate 531 and the lower plate 535 to thus ensure damage prevention and stability.

As shown in FIG 6, each first multi-stacked blade part 550 has through holes 553 formed thereon at given intervals, and fixing bolts 750 are penetratingly coupled to the through holes 553.

The fixing bolts 570 are penetratingly coupled to coupling holes 537 formed radially along the periphery of the lower plate 535 and thus allow the lower plate 535 and the first multi-stacked blade parts 550 to be fixed to the upper plate 531.

Further, as shown in FIG 7, each second multi-stacked blade part 560 includes a pair of holders 562 and the plurality of blades 561 disposed between the pair of holders 562.

The second multi-stacked blade part 560 as shown in FIG 7 is suggested, while some of the blades 561 are being removed, and the blades 561 are provided to form a stacked portion in which the same gaps G2 are repeatedly formed.

According to the invention, the blades 561 have the shapes of bands stacked sequentially onto one another to form the gaps G2.

Each second multi-stacked blade part 560 is configured to have the front ends of the blades 561 coupledly inserted into the gap G1 of each first multi-stacked blade part 550 and have the rear end of the blades 561 extending to a given length to be thus adjacent to the rotating center axis S of the blade rotating body 530.

In this case, as shown in FIGs. 6 and 7, each second multi-stacked blade part 560 has the shape of an arch with a given length, and the six second multi-stacked blade parts 560 are disposed radially along the blades 551 of each first multi-stacked blade part 550 around the rotating center axis S.

In this case, as shown in FIG 6, each blade 561 has the shape of an arch slant in the rotating direction thereof.

Further, as shown in FIGs. 5 and 6, the rear ends of the six blades 561 extending toward the direction of the rotating center axis S are located on an imaginary circle C having a given diameter.

In this case, the diameter of the imaginary circle C is somewhat smaller than the diameter of the inlet hole 536 into which the ballast water is introduced, and accordingly, the rear ends of the second multi-stacked blade parts 560 are exposed to the outside when seen on the underside of the blade rotating body 530.

As a result, the ballast water introduced from the inlet hole 536 of the lower plate 535 enters the rotating area A of the multi-stacked blade part 540, rotates together with the multi-stacked blade part 540, and is discharged radially.

In this case, as shown in FIG 6, the front ends of the blades 561 are desirably coupled to the blades 551 of the corresponding first multi-stacked blade part 550 to protrude outward from the blades 551, but as shown in FIG 4, they do not protrude outward from the peripheries of the upper plate 531 and the lower plate 535 to thus ensure the damage prevention and stability of the blades 561.

Further, the holders 562 and the blades 561 have through holes 567 and 568 formed on both ends thereof on the same lines as one another in a vertical direction, and they have inclined surfaces 563 formed on the front ends thereof.

In this case, the fixing bolts 570 are penetratingly coupled to the through holes 567 and 568, and accordingly, the second multi-stacked blade parts 560 are fixed to the upper plate 531 by means of the fixing bolts 570 and nuts.

In specific, the fixing bolts 570 for coupling the lower plate 535 and the first multi-stacked blade parts 550 to the upper plate 531 are coupled to the through holes 568 formed on the front ends of the blades 561, and the fixing bolts 570 for coupling the second multi-stacked blade parts 560 to the upper plate 531 are coupled to the through holes 567 formed on the rear ends of the blades 561.

As a result, the first multi-stacked blade parts 550 and the second multi-stacked blade parts 560 simultaneously rotate together with the upper plate 531 and the lower plate 535 when the driver 580 rotates.

Further, the front ends of the holders 562 and the blades 561 of the second multi-stacked blade parts 560 are coupledly inserted into the gaps G1 of the first multi-stacked blade parts 550, so that the second multi-stacked blade parts 560 provide the gaps G2 corresponding to the thicknesses of the blades 551 of the first multi-stacked blade parts 550.

Accordingly, spacers 565 corresponding to the gaps G1 are fitted to the through holes 567 formed on the rear ends of the second multi-stacked blade parts 560.

The spacers 565 are common washers that can be fit to the fixing bolts 570, but only if given members can keep the gaps G2, they may be freely adopted as the spacers 565.

As a result, the blades 561 of the second multi-stacked blade parts 560 are stacked onto one another, while keeping the gaps G2 corresponding to the thicknesses of the spacers 565.

Further, the front ends of the blades 561 of the second multi-stacked blade parts 560 are alternately stacked with the blades 551 of the first multi-stacked blade parts 550. As a result, the blades 561 of the second multi-stacked blade parts 560 are kept fitted to the gaps G1 of the first multi-stacked blade parts 550, and accordingly, the gaps G1 formed by the first multi-stacked blade parts 550 and the gaps G2 formed by the second multi-stacked blade parts 560 do not have any same height as one another and are thus located to cross one another.

In specific, when viewed in the horizontal direction of the blade rotating body 530, the blades 551 of the first multi-stacked blade parts 550 are located at the same heights as the gaps G2 of the second multi-stacked blade parts 560, and the blades 561 of the second multi-stacked blade parts 560 are located at the same heights as the gaps G1 of the first multi-stacked blade parts 550.

Further, if the blades 551 of the first multi-stacked blade parts 550 have the same thicknesses as the blades 561 of the second multi-stacked blade parts 560, the gaps G1 and G2 have the same thicknesses as one another.

As a result, the ballast water passing through the gaps G2 of the second multi-stacked blade parts 560 collides against the blades 551 of the first multi-stacked blade parts 550, while having a centrifugal force applied thereto, so that the microorganisms can be more effectively pulverized and killed.

In this case, the second multi-stacked blade parts 560 have the spacers 565 with the appropriate thicknesses in consideration of the thicknesses of the blades 551 of the first multi-stacked blade parts 550, thereby appropriately adjusting the gaps G1 and G2.

In specific, the spacers 565 are not needed on the portions where the first multi-stacked blade parts 550 and the second multi-stacked blade parts 560 are overlaid onto one another, but if it is desired to adjust the gaps G1 and G2, the spacers 565 may be located on the portions where the first multi-stacked blade parts 550 and the second multi-stacked blade parts 560 are overlaid onto one another.

According to the present invention, the gaps of the first and second multi-stacked blade parts 550 and 560 are desirably kept to about 2 to 5 mm, but they may be appropriately determined in consideration of a flow rate of ballast water or usable conditions, without being limited thereto.

If the gaps G1 and G2 are too small, for example, ultra microorganisms may be effectively removed, but an appropriate amount of ballast water may not be ensured. Contrarily, if the gaps G1 and G2 are too large, a relatively large amount of ballast water may be ensured, but the removal effectiveness of the ultra microorganisms may become low.

Accordingly, the gaps G1 and G2 are appropriately determined in size in consideration of a flow rate of ballast water, sizes or properties of the microorganisms to be removed, and the like.

Further, even the pairs of holders 562 of the second multi-stacked blade parts 560 are inserted into the gaps G1 of the first multi-stacked blade parts 550, and accordingly, they have appropriate thicknesses in consideration of the gaps G1 of the first multi-stacked blade parts 550.

Next, an explanation of the disinfecting treatment part 600 of the ballast water treatment device 700 will be given.

The disinfecting treatment part 600 serves to secondarily disinfect the microorganisms, germs, and bacteria contained in the ballast water supplied through the ballast water supply pipe 150 by means of a chemical or electrical treatment.

The disinfecting treatment part 600 includes at least any one of a chemical feed unit for feeding a chemical as a given disinfectant to the ballast water to thus disinfect the residual microorganisms, and an electrolysis unit for producing an oxidant.

First, the chemical feed unit as the disinfecting treatment part 600 will be explained.

The chemical feed unit makes use of chlorine dioxide (ClO₂) as an oxidant and includes a chemical tank for storing the chlorine dioxide and a feed pump for feeding the chlorine dioxide stored in the chemical tank to the ballast water.

Accordingly, the chemical feed unit serves to feed an appropriate amount of chlorine dioxide to the ballast water using the feed pump according to the control of the controller 900.

In the case of the conventional chemical treatment part 135 (See FIG 1), the ultra microorganisms that can be filtered in the filtering part 131 are limited so that a lot of microorganisms not filtered through the filtering part 131 enter the chemical treatment part 135, and to kill all of the microorganisms through the chemical treatment part 135, at least 6 ppm high-concentration hypochlorite (NaClO) is fed to the ballast water.

The hypochlorite is produced when sea water is electrolyzed, and in conventional practices, accordingly, a hypochlorite producing device is additionally mounted on the ship to ensure production of a large amount of hypochlorite, thereby causing additional equipment installation and high power consumption, and so as to discharge the ballast water, further, the neutralizing device 142 for neutralizing the residual hypochlorous acid in the ballast water has to be necessarily installed.

According to the present invention, however, the mechanical rotating shocks are consistently applied to the ballast water by means of the micro slash unit 500, thereby killing almost all of ultra microorganisms, and accordingly, the chemical feed unit for secondarily treating the microorganisms just feeds a minimal amount of chlorine dioxide to the ballast water.

In specific, the chemical feed unit as the disinfecting treatment part 600 desirably feeds about 1 ppm low-concentration chlorine dioxide to the ballast water.

According to the present invention, the ballast water treatment system makes use of a relatively small amount of chlorine dioxide, and therefore, the chlorine dioxide is stored in a chemical tank and thus used, without having any additional chlorine dioxide producing device.

In this case, the chlorine dioxide is fed to the ballast water, while being kept to a low concentration of about 1 ppm, and since the low-concentration chlorine dioxide is dissociated in a natural state, the ballast water treatment system according to the present invention does not require any additional neutralizing device 142 for neutralizing the residual hypochlorous acid in the ballast water and any additional sensors accompanied thereby.

Further, the feed pump is connected to the chemical tank and thus feeds the chemical to the ballast water supply pipe 150 according to the control of the controller 900. A metering pump or air compressor used typically may be used as the feed pump to thus feed the chlorine dioxide to the ballast water.

In addition to the chemical feed unit, the electrolysis unit may be used as the disinfecting treatment part 600.

If it is desired to electrolyze sea water, a hypochlorous acid as one of oxidants is generated to thus disinfect the residual microorganisms in the ballast water.

Accordingly, a general electrolysis device is used as the electrolysis unit, and the electrolysis device is connected to the ballast water supply pipe 150 to electrolyze the ballast water (sea water). In this case, the residual microorganisms are disinfected by using the hypochlorous acid as the oxidant produced in the ballast water.

According to the present invention, the mechanical rotating shocks are consistently applied to the ballast water by means of the micro slash unit 500, thereby primarily killing almost all of ultra microorganisms, and accordingly, the plasma unit or the UV unit for secondarily treating the microorganisms can be minimized in plasma or UV strength, thereby improving energy efficiency.

Even in the case of the electrolysis unit, further, the electrolysis strength is lowered to minimize the production of the hypochlorous acid as the oxidant, thereby improving energy efficiency and satisfying the regulations for ballast water discharge, without having any additional neutralizing device for neutralizing the produced hypochlorous acid.

Meanwhile, the sensor 800 serves to measure concentration of the residual oxidant contained in the ballast water passing through the ballast water treatment device 700, and accordingly, the controller 900 determines whether the ballast water satisfies the environmental regulations in response to the residual oxidant concentration measured by the sensor 800.

In this case, a typical Total Residual Oxidant (TRO) sensor may be used as the sensor 800 to measure concentrations of oxidants.

The sensor 800 desirably includes a display unit for displaying the residual oxidant concentration with numerical values to allow the concentration values to be seen from the outside, so that the residual oxidant concentration can be monitored in real time at the outside.

Hereinafter, operating processes of the ballast water treatment system using the micro slash unit according to the present invention will be explained in detail with reference to FIGs. 8 to 10.

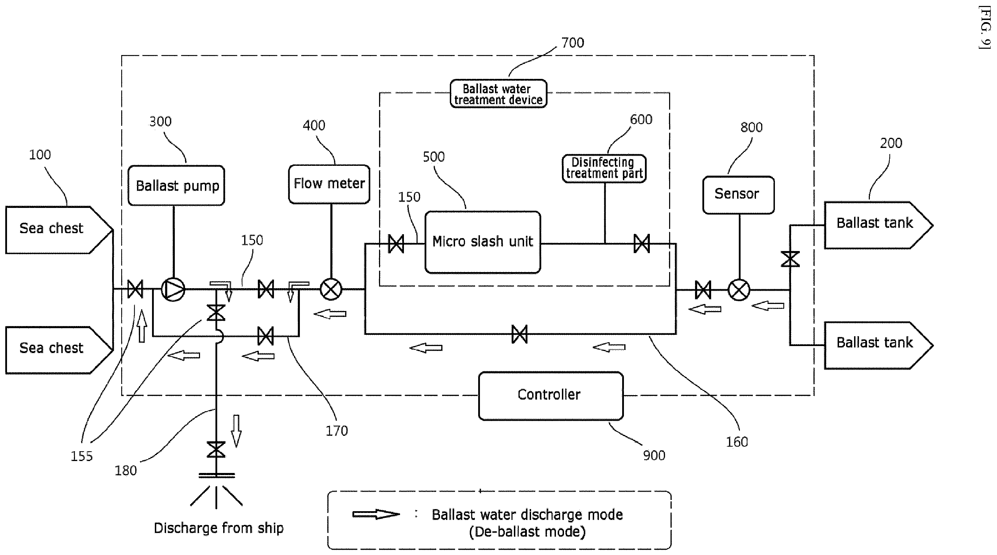

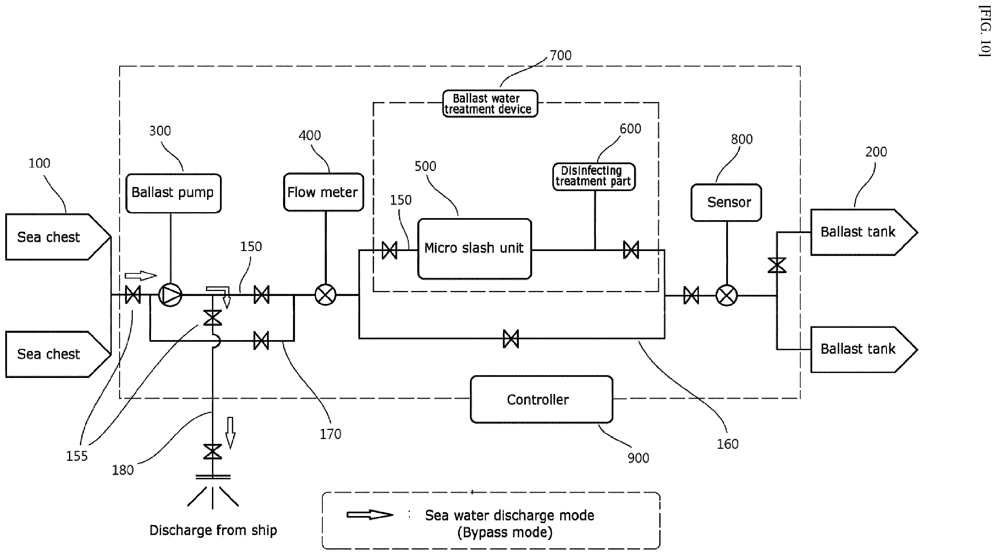

FIG 8 is a schematic diagram showing a ballast mode of the ballast water treatment system using the micro slash unit according to the present invention, FIG 9 is a schematic diagram showing a de-ballast mode of the ballast water treatment system using the micro slash unit according to the present invention, and FIG 10 is a schematic diagram showing a bypass mode of the ballast water treatment system using the micro slash unit according to the present invention.

In the ballast water treatment system using the micro slash unit according to the present invention, the ballast water supply pipe 150 includes the first branch pipe 160, the second branch pipe 170, and the bypass pipe 180 mounted thereon.

Accordingly, as the moving path of the ballast water is controlled through the first branch pipe 160, the second branch pipe 170, and the bypass pipe 180, as shown in FIGs. 8 to 10, the flow paths are selectively used according to a ballast mode, a de-ballast mode, and a bypass mode.

First, the ballast mode as shown in FIG 8 will be explained.

In the ballast mode, the ballast water (sea water) in the sea chests 100 is purified by the ballast water treatment device 700 and then filled in the ballast tanks 200.

First, the ballast pump 300 operates by the control of the controller 900 to forcedly supply the sea water in the sea chests 100 to the ballast tanks 200 through the ballast water supply pipe 150.

In this case, the flow meter 400 disposed close to the ballast pump 300 measures the flow rate of the ballast water passing therethrough and transmits the measured value to the controller 900.

Further, the ballast water passing through the flow meter 400 enters the micro slash unit 500 of the ballast water treatment device 700, as shown by an arrow in the figure.

Accordingly, as shown in FIG 3, the ballast water enters the interior of the blade rotating body 530 through the pipe connecting body 510.

In this case, the blade rotating body 530 rotates at about 850 to 1200 rpm according to the flow rate value measured by the flow meter 400 under the control of the controller 900, but the rotating speed may be determined appropriately according to various conditions such as the sizes of the gaps G1 and G2, and the like.

In this case, the ballast water enters the inlet pipe 511 through the inlet 512 of the pipe connecting body 510, moves upward, passes through the communicating hole 514 of the partition wall 513 and the inlet hole 536 formed on the lower plate 535 of the blade rotating body 530, and enters the rotating area A (See FIG. 6) of the blade rotating body 530.

Further, since the blade rotating body 530 and the multi-stacked blade part 540 rotate at a high speed by means of the rotation of the driver 580, the ballast water entering the rotary area A of the multi-stacked blade part 540 rotates together with the multi-stacked blade part 540.

In this case, the ballast water receives the flow pressure of the ballast pump 300 and the centrifugal force generated from the rotation of the multi-stacked blade part 540, passes through the gaps G2 of the second multi-stacked blade parts 560 and the gaps G1 of the first multi-stacked blade parts 550, and is discharged to the outside (in the radial direction) of the blade rotating body 530.

Further, the blades 551 and 561 of the first multi-stacked blade parts 550 and the second multi-stacked blade parts 560 apply rotating forces, while passing the ballast water therethrough, and in the process where the ballast water passes through the gaps G1 and G2 and pushes toward the outside, the blades 551 and 561 consistently apply the mechanical rotating shocks to the ballast water.

In this case, the ballast water generates complex vortexes in a process of colliding against or cutting by the blades 551 and 561 and is thus discharged in the radial direction of the blade rotating body 530.

As a result, the microorganisms contained in the ballast water repeatedly collide against or cut by the blades 551 and 561 of the first multi-stacked blade parts 550 and the second multi-stacked blade parts 560, so that they are pulverized and killed.

Further, as shown in FIG 3, the ballast water passing through the blade rotating body 530 moves slantly downward, passes through the outlet pipe 517 and the ballast water supply pipe 150 sequentially, and enters the disinfecting treatment part 600.

The ballast water in which the microorganisms are primarily pulverized and killed through the micro slash unit 500 moves to the disinfecting treatment part 600, and in this case, the disinfecting treatment part 600 secondarily disinfects the microorganisms, germs, and bacteria not killed through the micro slash unit 500 by means of the chemical or electrical treatment.

Accordingly, the ballast water in which the harmful microorganisms are completely removed through the ballast water treatment device 700 is obtained.

Further, the ballast water treated through the ballast water treatment device 700 moves along the ballast water supply pipe 150, as shown by an arrow in the figure, and in this case, the sensor 800 measures the residual oxidant concentration of the ballast water using the TRO sensor and transmits the measured value to the controller 900, while displaying the residual oxidant concentration in real time to allow the concentration value to be recognized by a worker at the outside.

The controller 900 appropriately controls an amount of oxidant fed, and electrolysis strength in the disinfecting treatment part 600 according to the flow rate value of the ballast water supplied and the measured value in the sensor 800.

Hereinafter, the de-ballast mode will be explained with reference to FIG. 9.

In the de-ballast mode, the ballast water filled in the ballast tanks 200 is discharged to the outside from the ship, and as shown, the ballast water moves from the ballast tanks 200 to the sea chests 100 along the ballast water supply pipe 150 in the opposite direction to the flow path in the ballast mode.

In this case, the controller 900 opens the valves 155 mounted on the paths passing through the first branch pipe 160, the second branch pipe 170, and the bypass pipe 180 and closes the rest of the valves 155.

Accordingly, if the ballast pump 300 operates, the ballast water filled in the ballast tanks 200 passes through the first branch pipe 160 and thus moves, without passing through the ballast water treatment device 700.

In this case, the sensor 800 and the flow meter 400 measure the residual oxidant concentration of the ballast water and the flow rate value of the ballast water.

Further, as shown, the ballast water passing through the first branch pipe 160 passes through the second branch pipe 170, enters the ballast water supply pipe 150 by means of the ballast pump 300, and is thus discharged to the outside from the ship through the bypass pipe 180, as shown by an arrow in the figure.

Accordingly, the ballast water is discharged to the outside from the ship by using the ballast pump 300 through the control of the moving path, without any additional discharge pump for discharging the ballast water to the outside from the ship.

In the bypass mode, as shown in FIG 10, the sea water in the sea chests 100 is discharged directly to the outside from the ship if necessary, without being supplied to the ballast tanks 200, and to do this, in a state where the valve 155 located between the sea chests 100 and the ballast pump 300 and the valve 155 mounted on the bypass pipe 180 are open, the ballast pump 300 operates to directly discharge the sea water to the outside from the ship.

According to the present invention, the flow path of the ballast water is controlled by using the ballast water supply pipe 150, the first branch pipe 160, the second branch pipe 170, and the bypass pipe 180, thereby efficiently adjusting the discharge of the sea water from the sea chests 100, the treatment and supply of the ballast water, and the discharge of the ballast water to the outside from the ship.

According to the present invention, further, the microorganisms are mechanically removed by using the micro slash unit 500, thereby preventing the occurrence of the clogging in the supply of sea water by the use of the filtering part, and the ballast water treatment system is compact in size. Further, upon a repair work such as installation or replacement of the ballast water treatment system, the repair work can be done on the ship itself, without moving to a dry dock, thereby remarkably reducing a cost caused by the stop of sailing, and even the ultra microorganisms are perfectly killed, thereby effectively satisfying the environmental regulations for ballast water discharge.

The desirable embodiment of the ballast water treatment system using the micro slash unit according to the present invention has been explained as mentioned above, but without being limited thereto, various other embodiments may be adopted.

In the case of the micro slash unit 500, the blades 551 of each first multi-stacked blade part 550 are coupled to one another to have an integral structure in the form of a single ring, but for example, the six blades 551 may be separately coupled to one another to form one circular blade 551, in the same manner as the second multi-stacked blade parts 560.

In this case, if some of the blades 551 of the first multi-stacked blade parts 550 are damaged, only the damaged blades 551 are replaced by new ones, thereby performing easy maintenance thereof.

Further, the positions, numbers, or connection structures of the ballast water supply pipe 150, the first branch pipe 160, the second branch pipe 170, the bypass pipe 180, and the plurality of valves 155 may be appropriately adjusted according to changes in design.

### Industrial Applicability

As described above, the ballast water treatment system using the micro slash unit according to the present invention can effectively kill harmful microorganisms or planktons contained in the sea water, thereby being applicable to various ballast water treatment systems for satisfying the environmental regulations for ballast water discharge and to various sea water supply lines having a need for killing microorganisms.

## Claims

1. A ballast water treatment system for purifying ballast water to be supplied to ballast tanks (200) of a ship, the system comprising:
a ballast pump (300) located on a ballast water supply pipe (150) for supplying the ballast water;
a flow meter (400) placed downstream of the ballast pump (300) for measuring a flow rate of the ballast water passing through the ballast pump (300);
a ballast water treatment device (700) for purifying the ballast water having passed through the flow meter (400);
a sensor (800) for measuring residual oxidant concentration of the ballast water; and
a controller (900) for controlling the supply and purification of the ballast water,
wherein the ballast water treatment device (700) comprises a micro slash unit (500) adapted to consistently apply mechanical rotating shocks to the ballast water by means of the rotation of a multi-stacked blade (540) part to thus pulverize or kill microorganism contained in the ballast water and a disinfecting treatment part (600) for chemically or electrically disinfecting the residual microorganisms in the ballast water,
the sensor (800) is placed downstream of the disinfecting treatment part (600),
the micro slash unit (500) comprises a pipe connecting body (510) connected to the ballast water supply pipe (150), a blade rotating body (530) disposed in the pipe connecting body (510) and having the multi-stacked blade part (540) mounted thereon, and a driver (580) for rotating the blade rotating body (530),
the blade rotating body (530) comprises an upper plate (531) fitted to a driving shaft (582) of the driver (580), a lower plate (535) facingly spaced apart from the upper plate (531) in the direction of a rotating center axis and having an inlet hole (536) formed on the central portion thereof to introduce the ballast water thereinto, and the multi-stacked blade part (540) mounted between the upper plate (531) and the lower plate (535) and having a plurality of gaps formed therein, so that the ballast water is introduced through the inlet hole (536) in the direction of the rotating center axis and thus discharged in a radial direction through the plurality of gaps,
the multi-stacked blade part (540) comprises a plurality of first multi-stacked blade parts (550) mounted along the peripheries of the inner surfaces of the upper plate (531) and the lower plate (535), wherein the first multi-stacked blade parts (550) have a plurality of circular band-shaped blades (551) sequentially stacked onto another to repeatedly form a first plurality of gaps (G1) in the form of rings around the rotating center axis (S), and a plurality of second multi-stacked blade parts (560) in the form of blades (561) having the shape of bands, each one having its front end coupledly inserted into each corresponding gap (G1) of the first multi-stacked blade parts (550) and its rear end extending to a given length to be thus adjacent to the rotating center axis (S) of the blade rotating body (530), the blades (561) of the second multi-stacked blade parts (560) being stacked sequentially onto one another to form a second plurality of gaps (G2), and
the controller (900) controls the revolutions per minute of the blade rotating body (530) and the disinfection strength of the disinfecting treatment part (600) according to the flow rate measured by the flow meter (400) and the residual oxidant concentration measured by the sensor (800).

2. The ballast water treatment system according to claim 1, wherein the controller (900) rotates the blade rotating body (530) of the micro slash unit (500) at 850 to 1200 rpm.

3. The ballast water treatment system according to claim 1, wherein the disinfecting treatment part (600) comprises at least any one of a chemical feed unit for feeding a chemical to the ballast water to disinfect the residual microorganisms, and an electrolysis unit for producing an oxidant.

4. The ballast water treatment system according to claim 3, wherein the chemical feed unit feeds chlorine dioxide as the chemical to the ballast water.

5. The ballast water treatment system according to any one of claims 1 to 4, wherein the ballast water supply pipe (150) comprises a first branch pipe (160) for bypassing the ballast water treatment device (700), a second branch pipe (170) for bypassing the ballast pump (300), and a bypass pipe (180) disposed between the ballast pump (300) and the flow meter (400) to discharge the ballast water to the outside from the ship, so that the ballast water in the ballast tanks (200) is discharged to the outside from the ship, without passing through the ballast water treatment device (700).

## Patentansprüche

1. Ein Ballastwasserbehandlungssystem zur Reinigung von Ballastwasser, welches Ballasttanks (200) eines Schiffes zugeführt werden soll, wobei das System aufweist:
eine Ballastpumpe (300), welche an einer Ballastwasserzufuhrleitung (150) zur Zufuhr des Ballastwassers angeordnet ist,
einen Durchflussmesser (400), welcher stromabwärts der Ballastpumpe (300) angeordnet ist, um die Durchflussrate des durch die Ballastpumpe (300) strömenden Ballastwassers zu messen,
eine Ballastwasserbehandlungsvorrichtung (700) zum Reinigen des durch den Durchflussmesser (400) geströmten Ballastwassers,
einen Sensor (800) zur Messung der Restoxidationsmittelkonzentration im Ballastwasser; und
eine Steuereinrichtung (900) zum Steuern der Zufuhr und Reinigung des Ballastwassers,
wobei die Ballastwasserbehandlungsvorrichtung (700) eine Mikroschneideeinheit (500), welche dazu eingerichtet ist, durch die Rotation eines mehrfach gestapelten Klingenteils (540) beständig mechanische Drehstöße auf das Ballastwasser auszuüben, um dadurch im Ballastwasser enthaltene Mikroorganismen zu zerkleinern oder zu töten, und einen Desinfektionsbehandlungsteil (600) zur chemischen oder elektrischen Desinfektion der restlichen Mikroorganismen im Ballastwasser aufweist,
der Sensor (800) stromabwärts des Desinfektionsbehandlungsteils (600) angeordnet ist,
die Mikroschneideeinheit (500) einen Rohrverbindungskörper (510), welcher mit der Ballastwasserzufuhrleitung (150) verbunden ist, einen Klingenrotationskörper (530), welcher in dem Rohrverbindungskörper (510) angeordnet ist und an welchem der mehrfach gestapelte Klingenteil (540) angebracht ist, und einen Antrieb (580) zum Drehen des Klingenrotationskörpers (530),
wobei der Klingenrotationskörper (530) aufweist eine obere Platte (531), welche an einer Antriebswelle (582) des Antriebs (580) befestigt ist, eine untere Platte (535), welche von der oberen Platte (531) in der Richtung einer Rotationszentrumsachse gegenüberliegend im Abstand angeordnet ist und ein Einlassloch (536) aufweist, welches an ihrem zentralen Abschnitt ausgebildet ist, um das Ballastwasser darin einzuführen, und wobei der mehrfach gestapelte Klingenteil (540) zwischen der oberen Platte (531) und der unteren Platte (535) angebracht ist und eine Mehrzahl von Lücken darin ausgebildet aufweist, so dass so dass das Ballastwasser durch die Einlassöffnung (536) in Richtung der Rotationszentrumsachse eingeleitet und somit in der Radialrichtung durch die Mehrzahl von Spalten ausgestoßen wird,
wobei der mehrfach gestapelte Klingenteil (540) aufweist eine Mehrzahl von ersten mehrfach gestapelten Klingenteilen (550), welche entlang der Umfänge der Innenflächen der oberen Platte (531) und der unteren Platte (535) angebracht sind, wobei die ersten mehrfach gestapelten Klingenteile (550) eine Mehrzahl von kreisförmigen, streifenförmigen Klingen (551) aufweisen, welche nacheinander übereinander gestapelt sind, um wiederholt eine erste Mehrzahl von Spalten (G1) in Form von Ringen um die Rotationszentrumsachse (S) zu bilden, und eine Mehrzahl von zweiten mehrfach gestapelten Klingenteilen (560) in Form von Klingen (561) mit der Form von Streifen, von denen jede mit ihrem vorderen Ende in den jeweilig zugehörigen Spalt (G1) der ersten mehrfach gestapelten Klingenteile (550) auf verbundene Weise eingeführt ist und mit ihrem hinteren Ende sich zu einer bestimmten Länge erstreckt, um somit zu der Rotationszentrumsachse (S) des Klingenrotationskörpers (530) benachbart zu sein, wobei die Klingen (561) der zweiten mehrfach gestapelten Klingenteile (560) nacheinander aufeinander gestapelt sind, um eine zweite Mehrzahl von Spalten (G2) zu bilden, und
die Steuereinrichtung (900) die Umdrehungen pro Minute des Klingenrotationskörpers (530) und die Desinfektionsstärke des Desinfektionsbehandlungsteils (600) gemäß der durch den Durchflussmesser (400) gemessenen Durchflussrate und der durch den Sensor (800) gemessenen Restoxidationsmittelkonzentration steuert.

2. Das Ballastwasserbehandlungssystem nach Anspruch 1, wobei die Steuereinrichtung (900) den Klingenrotationskörper (530) der Mikroschneideeinheit (500) mit 850 bis 1200 U/min dreht.

3. Das Ballastwasserbehandlungssystem nach Anspruch 1, wobei der Desinfektionsbehandlungsteil (600) mindestens eine von einer Chemikalienzufuhreinheit zum Einbringen einer Chemikalie in das Ballastwasser, um die restlichen Mikroorganismen zu desinfizieren, und einer Elektrolyseeinheit zur Erzeugung eines Oxidationsmittels aufweist.

4. Das Ballastwasserbehandlungssystem nach Anspruch 3, wobei die Chemikalienzufuhreinheit Chlordioxid als die Chemikalie in das Ballastwasser einbringt.

5. Das Ballastwasserbehandlungssystem nach einem der Ansprüche 1 bis 4, wobei die Ballastwasserzufuhrleitung (150) eine erste Abzweigleitung (160) zum Umgehen der Ballastwasserbehandlungsvorrichtung (700), eine zweite Abzweigleitung (170) zum Umgehen der Ballastpumpe (300) und eine Bypassleitung (180), welche zwischen der Ballastpumpe (300) und dem Durchflussmesser (400) angeordnet ist, um das Ballastwasser aus dem Schiff nach außen abzuleiten, so dass das Ballastwasser in den Ballasttanks (200) aus dem Schiff nach außen abgeleitet wird, ohne die Ballastwasserbehandlungsvorrichtung (700) zu durchlaufen, aufweist.

## Revendications

1. Système de traitement d'eau de ballast pour purifier l'eau de ballast devant être fournie vers des citernes de ballast (200) d'un navire, le système comprenant :
une pompe de ballast (300) située sur une conduite d'alimentation en eau de ballast (150) pour fournir l'eau de ballast ;
un débitmètre (400) placé en aval de la pompe de ballast (300) pour mesurer un débit de l'eau de ballast passant à travers la pompe de ballast (300) ;
un dispositif de traitement d'eau de ballast (700) pour purifier l'eau de ballast ayant traversé le débitmètre (400) ;
un capteur (800) pour mesurer une concentration en oxydant résiduel de l'eau de ballast ; et
un contrôleur (900) pour contrôler l'alimentation et la purification de l'eau de ballast,
dans lequel le dispositif de traitement d'eau de ballast (700) comprend une unité de micro-broyage (500) adaptée pour appliquer de manière constante des chocs mécaniques rotatifs à l'eau de ballast au moyen de la rotation d'une partie à lames multi-empilées (540) afin de pulvériser ou de détruire des micro-organismes contenus dans l'eau de ballast, et une partie de traitement de désinfection (600) pour désinfecter chimiquement ou électriquement les micro-organismes résiduels dans l'eau de ballast,
le capteur (800) est placé en aval de la partie de traitement de désinfection (600),
l'unité de micro-broyage (500) comprend un corps de raccordement de conduite (510) relié à la conduite d'alimentation en eau de ballast (150), un corps de rotation de lames (530) disposé dans le corps de raccordement de conduite (510) et sur lequel est montée la partie à lames multi-empilées (540), et un entraîneur (580) pour faire tourner le corps de rotation de lames (530),
le corps de rotation de lames (530) comprend une plaque supérieure (531) montée sur un arbre d'entraînement (582) de l'entraîneur (580), une plaque inférieure (535) espacée en face de la plaque supérieure (531) dans la direction d'un axe central de rotation et comportant un orifice d'entrée (536) formé sur sa partie centrale pour y introduire l'eau de ballast, et la partie à lames multi-empilées (540) montée entre la plaque supérieure (531) et la plaque inférieure (535) et comportant une pluralité d'interstices formés à son intérieur, de sorte que l'eau de ballast est introduite à travers l'orifice d'entrée (536) dans la direction de l'axe central de rotation et est ainsi évacuée dans une direction radiale à travers la pluralité d'interstices,
la partie à lames multi-empilées (540) comprend une pluralité de premières parties à lames multi-empilées (550) montées le long des périphéries des surfaces intérieures de la plaque supérieure (531) et de la plaque inférieure (535), les premières parties à lames multi-empilées (550) comportant une pluralité de lames circulaires en forme de bandes (551) empilées séquentiellement les unes sur les autres pour former de manière répétée une première pluralité d'interstices (G1) sous forme d'anneaux autour de l'axe central de rotation (S), et une pluralité de deuxièmes parties à lames multi-empilées (560) sous forme de lames (561) ayant la forme de bandes, chacune ayant son extrémité avant insérée de manière couplée dans chaque interstice correspondant (G1) des premières parties à lames multi-empilées (550) et son extrémité arrière s'étendant sur une longueur donnée pour être ainsi adjacente à l'axe central de rotation (S) du corps de rotation de lames (530), les lames (561) des deuxièmes parties à lames multi-empilées (560) étant empilées séquentiellement les unes sur les autres pour former une deuxième pluralité d'interstices (G2), et
le contrôleur (900) commande les tours par minute du corps de rotation de lames (530) et l'intensité de désinfection de la partie de traitement de désinfection (600) en fonction du débit mesuré par le débitmètre (400) et de la concentration résiduelle en oxydant mesurée par le capteur (800).

2. Système de traitement d'eau de ballast selon la revendication 1, dans lequel le contrôleur (900) fait tourner le corps de rotation de lames (530) de l'unité de micro-broyage (500) à 850 à 1200 tr/min.

3. Système de traitement d'eau de ballast selon la revendication 1, dans lequel la partie de traitement de désinfection (600) comprend au moins l'un parmi une unité d'alimentation chimique pour une alimentation en produit chimique de l'eau de ballast pour désinfecter les micro-organismes résiduels, et une unité d'électrolyse pour produire un oxydant.

4. Système de traitement d'eau de ballast selon la revendication 3, dans lequel l'unité d'alimentation chimique alimente l'eau de ballast en dioxyde de chlore en tant que produit chimique.

5. Système de traitement d'eau de ballast selon l'une quelconque des revendications 1 à 4, dans lequel la conduite d'alimentation en eau de ballast (150) comprend une première conduite de dérivation (160) pour contourner le dispositif de traitement d'eau de ballast (700), une deuxième conduite de dérivation (170) pour contourner la pompe de ballast (300), et une conduite de dérivation (180) disposé entre la pompe de ballast (300) et le débitmètre (400) pour évacuer l'eau de ballast vers l'extérieur du navire, de sorte que l'eau de ballast contenue dans les citernes de ballast (200) soit évacuée vers l'extérieur du navire, sans passer par le dispositif de traitement d'eau de ballast (700).
